# EUROPEAN PATENT SPECIFICATION

(11) **EP 3 951 730 B1**
(45) Date of publication and mention of the grant of the patent: **04.06.2025**
(21) Application number: 20776860.7
(22) Date of filing: 20.02.2020
(51) Int. Cl.: H04L 12/28

(54) **INFORMATION NOTIFICATION SYSTEM AND INFORMATION NOTIFICATION METHOD**
SYSTEM UND VERFAHREN ZUR INFORMATIONSMITTEILUNG
SYSTÈME ET PROCÉDÉ DE NOTIFICATION D'INFORMATIONS

(30) Priority: 26.03.2019 JP 2019059228
(43) Date of publication of application: 09.02.2022
(73) Proprietor: Panasonic Intellectual Property Management Co., Ltd., Osaka-shi, Osaka 540-6207 (JP)
(72) Inventor: YAMAMOTO, Kohsuke, Osaka-shi, Osaka 540-6207 (JP); OHHO, Masahiro, Osaka-shi, Osaka 540-6207 (JP); TAKAHASHI, Seigo, Osaka-shi, Osaka 540-6207 (JP); URABE, Hiroki, Osaka-shi, Osaka 540-6207 (JP)
(74) Representative: Grünecker Patent- und Rechtsanwälte PartG mbB
(86) International application number: PCT/JP2020/006664
(87) International publication number: WO 2020/195387

(56) References cited:
- WO-A1-2018/136172
- JP-A- 2015 088 086
- JP-A- 2016 076 799
- US-A1- 2015 281 891
- US-A1- 2015 288 745
- US-A1- 2016 360 344
- US-B1- 9 386 662

## Description

### [Technical Field]

The present disclosure relates to an information notification system and an information notification method.

### [Background Art]

Internet of Things (IOT) is gaining popularity, in which various types of equipment such as home appliances are connected to the Internet and control one another. By taking advantage of IoT, users become able to receive notification from equipment such as home appliances via other equipment. According to the invention described in JP 2017-204733(A), for example, information that is output from a home appliance is notified to a user via another information notification equipment or the like. This enables the user who is away from the home appliance to obtain the information output from the home appliance without carrying a mobile terminal capable of receiving information from home appliances.

According to JP 2017-204733(A), whether any person is present is sensed, and information notification equipment provides notification only when the presence of a person has been sensed. However, it may not be possible simply by providing notification to provide an appropriate form of notification to a person. Thus, there are cases where a person cannot adequately recognize the notification.

Patent document US 2015/0288745 A1 discloses an adaptive notification network with a plurality of notification nodes. In this network, information related to a target user can be acquired. The plurality of notification nodes can be ranked based on the information related to the target user and one or more notification nodes that satisfy one or more specified ranking criteria can be selected. The notification can be formatted based on at least one of the information related to the target user or information related to the one or more selected notification nodes. The formatted notification can then be transmitted to the one or more selected notification nodes.

Patent document WO 2018/136172 A1 discloses techniques for providing notification messages to a user. An example method of sending an alert messageto a user includes receiving a notification message for the user, determining a location of the user, determining one or more notification devices based the location of the user, generating the alert message based on one or more notification preferences associated with the user and the one or more notification devices, and sending the alert message to at least one of the one or more notification devices based on the notification preferences.

Patent document US 9,386,662 B1 discloses a technique for a customizable lighting controller. The lighting controller includes a display device to display selectable lighting functions, switches that each correspond to one of the selectable lighting functions, and a lighting controller manager to receive an input of a selectable lighting function at one of the switches of the lighting controller. The lighting controller manager can then initiate a display of the selected lighting level on the display device of the lighting controller.

In view of this, the present disclosure provides an information notification system that is capable of presenting notification information received from one apparatus in an appropriate form via another apparatus.

The present invention is defined in the appended independent claims to which reference should be made. Advantageous features are set out in the appended dependent claims.

### [Advantageous Effects of Invention]

The information notification system according to the present disclosure is capable of presenting notification information received from one apparatus in an appropriate form via another apparatus.

### [Brief Description of Drawings]

[FIG. 1]

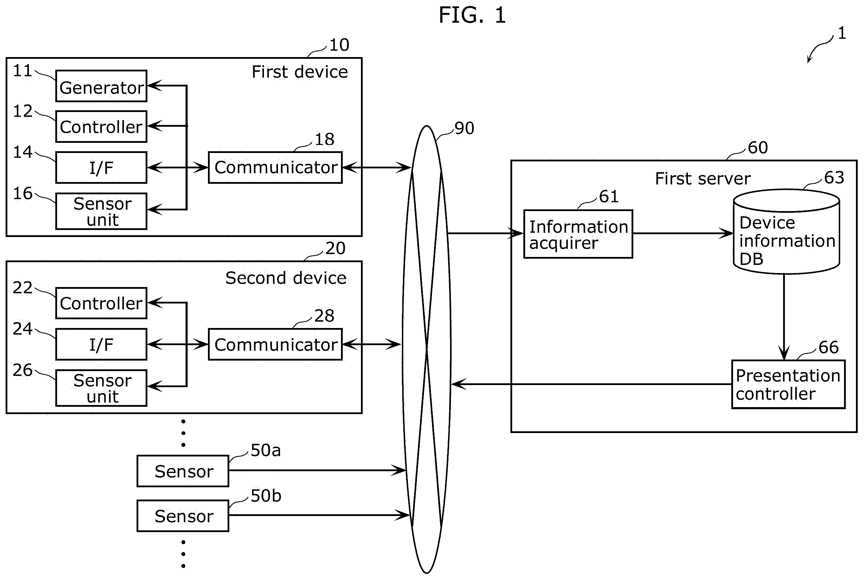

   FIG. 1 is a block diagram illustrating a functional configuration of an information notification system according to Embodiment 1.
[FIG. 2]

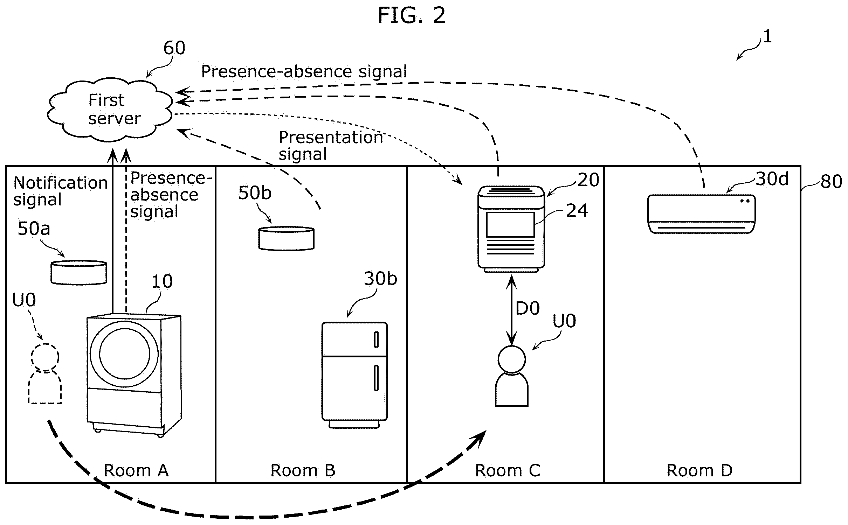

   FIG. 2 is a schematic diagram illustrating an exemplary configuration of the information notification system according to Embodiment 1 and an exemplary operation thereof.
[FIG. 3A]

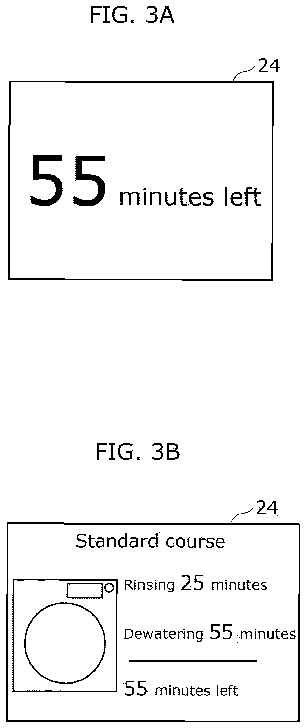

   FIG. 3A is a diagram illustrating one example of a notification image displayed on an interface of a second device according to Embodiment 1.
[FIG. 3B]
   FIG. 3B is a diagram illustrating another example of the notification image displayed on the interface of the second device according to Embodiment 1.
[FIG. 4]

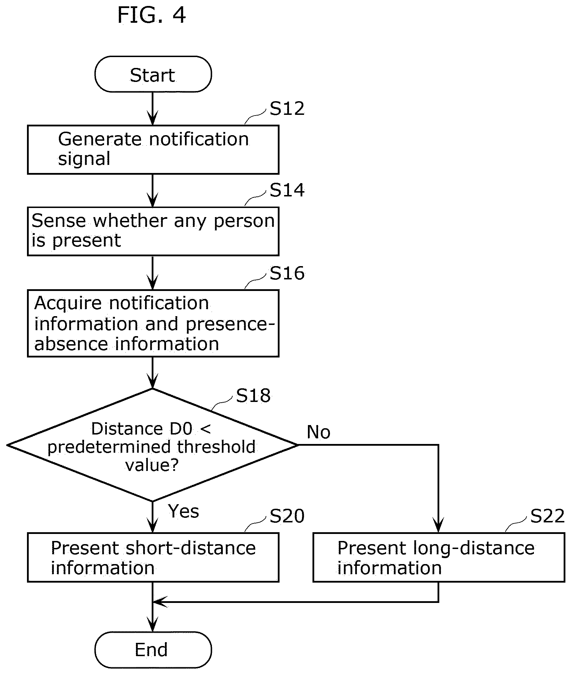

   FIG. 4 is a flowchart of an information notification method according to Embodiment 1.
[FIG. 5]

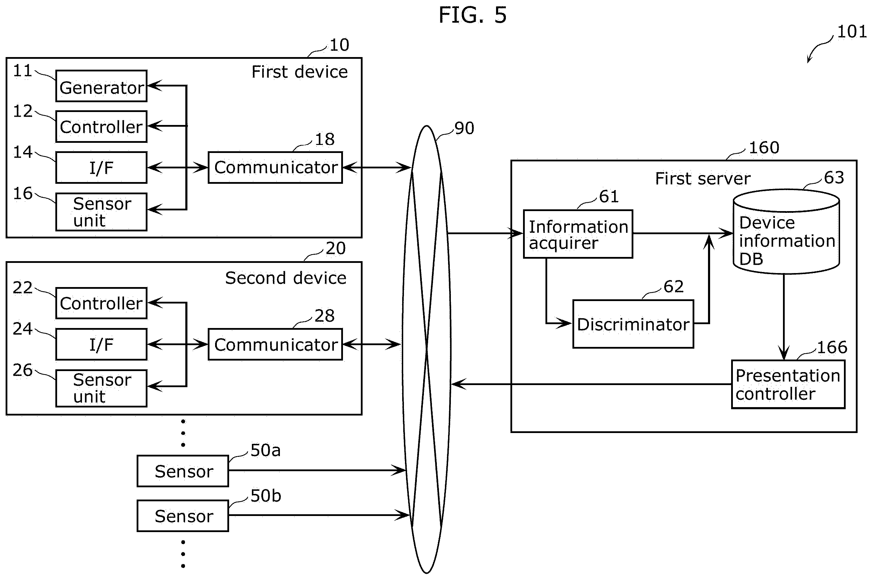

   FIG. 5 is a block diagram illustrating a functional configuration of an information notification system according to Embodiment 2.
[FIG. 6]

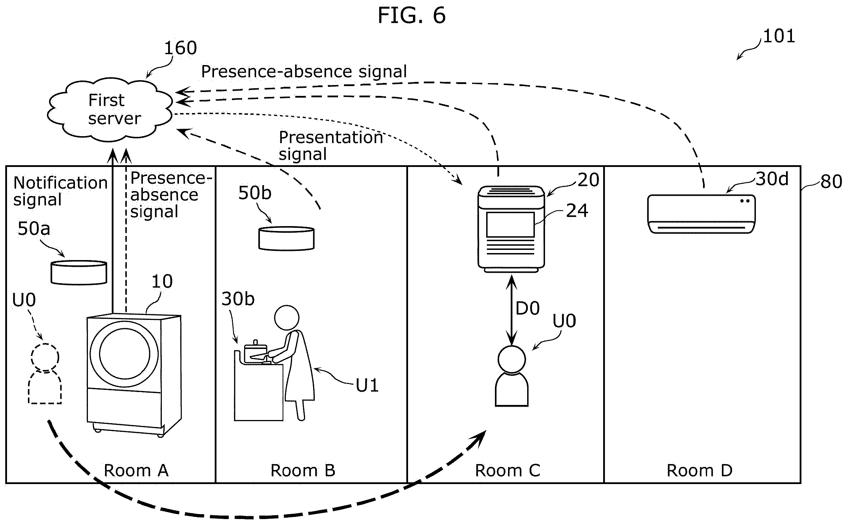

   FIG. 6 is a schematic diagram illustrating an exemplary configuration of the information notification system according to Embodiment 2 and an exemplary operation thereof.
[FIG. 7]

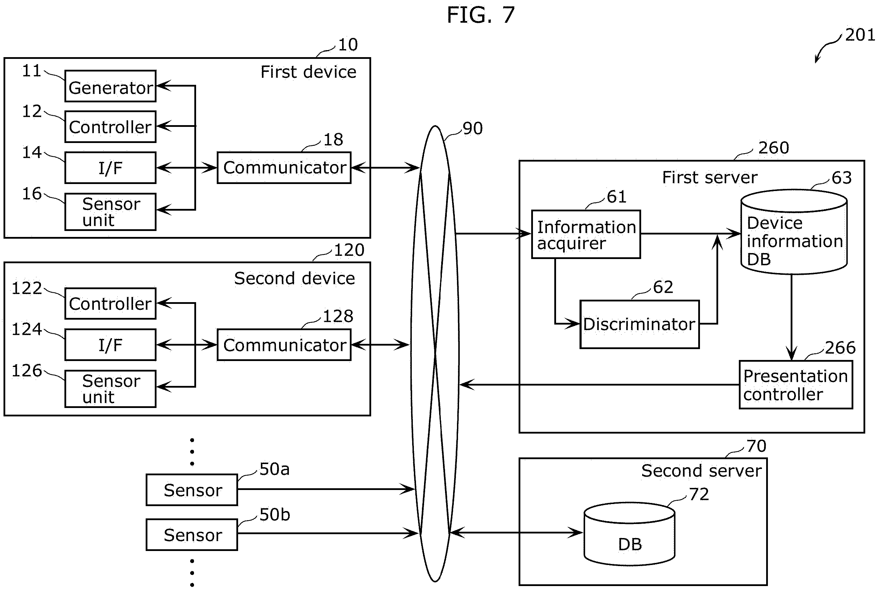

   FIG. 7 is a block diagram illustrating a functional configuration of an information notification system according to Embodiment 3.
[FIG. 8]

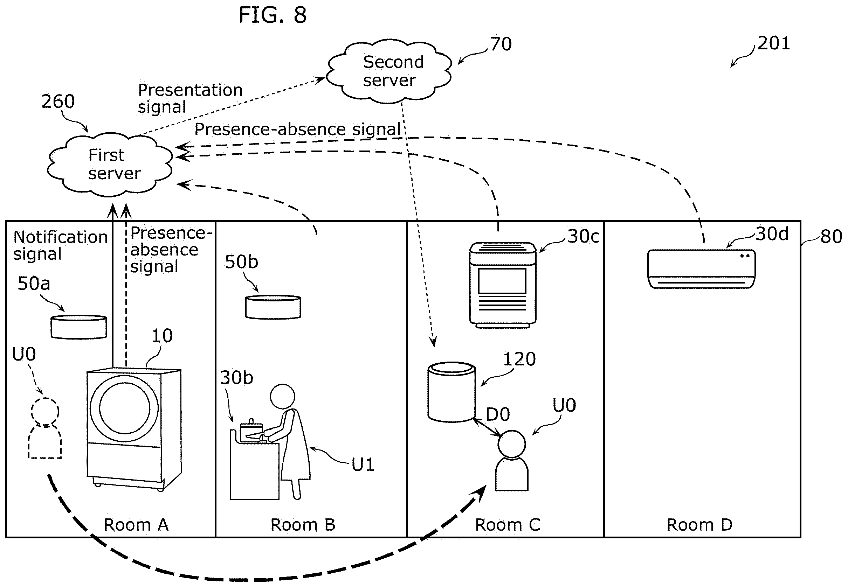

   FIG. 8 is a schematic diagram illustrating an exemplary configuration of the information notification system according to Embodiment 3 and an exemplary operation thereof.
[FIG. 9]

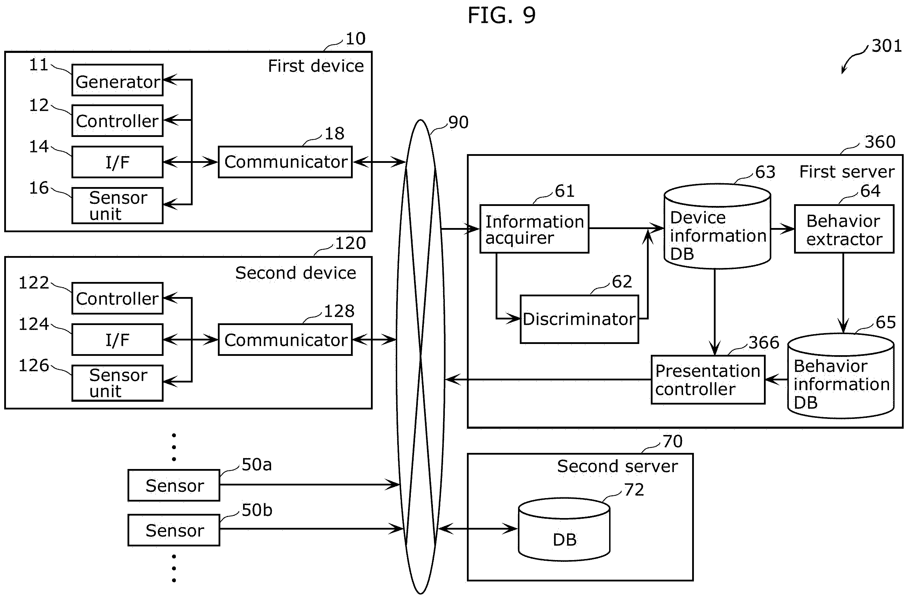

   FIG. 9 is a block diagram illustrating a functional configuration of an information notification system according to Embodiment 4.
[FIG. 10]

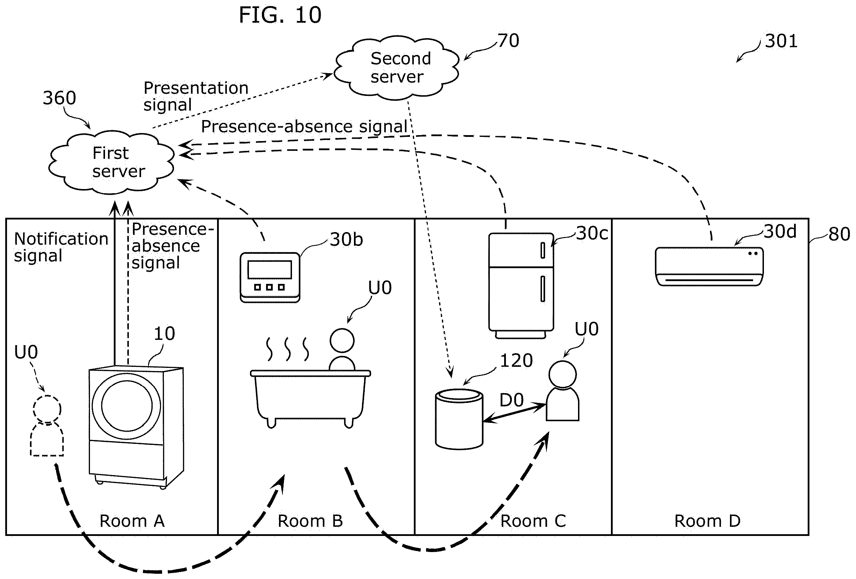

   FIG. 10 is a schematic diagram illustrating an exemplary configuration of the information notification system according to Embodiment 4 and an exemplary operation thereof.
[FIG. 11]

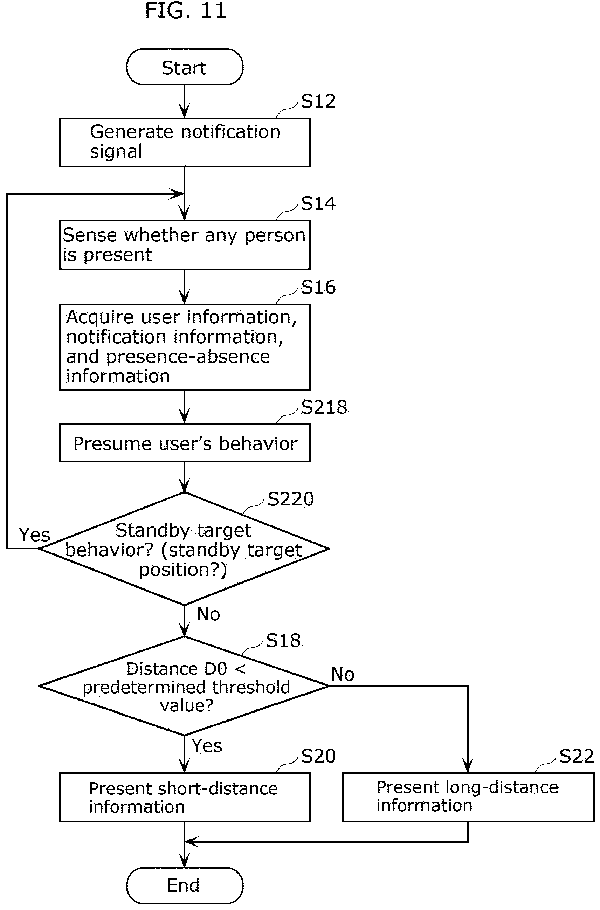

   FIG. 11 is a flowchart of an information notification method according to Embodiment 4.

### [Description of Embodiments]

In the following description, the invention is described with reference to figures 9-11, while the description of the remaining figures is provided for illustrative purposes for a better understanding of the invention.

### [Embodiment 1]

An information notification system and an information notification method according to Embodiment 1 will be described.

### [1-1. Configuration]

First, a configuration of the information notification system according to Embodiment 1 will be described with reference to FIG. 1. FIG. 1 is a block diagram illustrating a functional configuration of information notification system 1 according to the present embodiment.

Information notification system 1 according to the present embodiment is a system capable of presenting notification information output from each of a plurality of apparatuses including home appliances to a user not only from the apparatus but also via another apparatus. Information notification system 1 includes a plurality of apparatuses and one or more servers. The plurality of apparatuses and the one or more servers carry out communications via network 90. There are no particular limitations on network 90, as long as it is possible to form a communication network that connects the plurality of apparatuses and the one or more servers. Network 90 is a wired or wireless communication network. For example, the network may be a wired network compliant with standards such as Ethernet (registered trademark), or may be a wireless network compliant with standards such as Wi-Fi (registered trademark), Bluetooth (registered trademark), or ZigBee (registered trademark).

The one or more servers are devices that cause the apparatus located near the position of a user among the plurality of apparatuses to provide notification information to the user. The one or more servers include first server 60.

The plurality of apparatuses are devices located in a predetermined space such as a house. Examples of the plurality of apparatuses include home appliances such as a washing machine, a TV receiver, a microwave oven, a refrigerator, an air conditioner, and an air cleaner. Each of at least one of the plurality of apparatuses includes a sensor unit that senses whether any person is present and generates a presence-absence signal including person presence-absence information. For example, the plurality of apparatuses may include a sensor such as a human sensing sensor. In the present embodiment, the plurality of apparatuses include first device 10 and second device 20 as illustrated in FIG. 1. The plurality of apparatuses further include sensors 50a and 50b.

First device 10 is one exemplary apparatus that is used by a user and generates notification information that is to be provided to the user. First device 10 is the apparatus used by the user among the plurality of apparatuses, and which apparatus is to be identified as first device 10 is not determined until the user uses the apparatus. Thus, first device 10 is the apparatus temporarily identified based on the behavior of the user.

In present embodiment, first device 10 includes generator 11, interface 14, and communicator 18 as illustrated in FIG. 1. In FIG. 1 and other drawings, the interface is expressed as "I/F". In the present embodiment, first device 10 further includes controller 12 and sensor unit 16.

Generator 11 generates a notification signal including notification information that is to be provided to the user who uses first device 10. The notification information includes, for example, information that indicates operation details and operation conditions of first device 10. In the case where first device 10 is a washing machine, the notification information includes, for example, information indicating operation details such as "washing" and "rinsing" and operation conditions such as the remaining time until the completion of laundry. Note that the notification signal may include other information. For example, the notification signal may include user information for use in identifying the user. The user information refers to information for use in identifying the person who has used first device 10. For example, the user information may be information identified based on a signal input to interface 14 by the user. The user information may also be information about the user, acquired by sensor unit 16 of first device 10. For example, in the case where sensor unit 16 includes an image capturing device or the like, the user information may be information based on a captured image of the user. Generator 11 may generate the notification signal with timing of changes in, for example, operation details or operation conditions of first device 10, or may generate the notification signal at fixed time intervals.

Controller 12 controls primary operations of first device 10. The primary operations differ depending on the function of first device 10. For example, in the case where first device 10 is a washing machine, the primary operations are operations such as laundry, and in the case where first device 10 is a refrigerator, the primary operations are operations such as temperature control in the refrigerator.

Interface 14 transfers information between the user and first device 10. More specifically, interface 14 receives a user operation and converts the operation into a signal indicating the operation. Interface 14 may also present notification information that is provided to the user by first device 10. For example, interface 14 may present the notification information by sounds, or may present the notification information via images such as characters. Interface 14 may, for example, be a touch panel, or may include a keyboard and a display.

Sensor unit 16 senses whether any person is present and generates a presence-absence signal including person presence-absence information. Sensor unit 16 may also discriminate between one or more persons and generate a presence-absence signal including presence-absence information about each of the one or more persons. Sensor unit 16 may, for example, be a human sensing sensor, or may include an image capturing device and an image processor. Sensor unit 16 may discriminate the user by capturing an image of the user with the image capturing device and processing the captured image by the image processor.

Communicator 18 carries out communications with the other apparatuses and the one or more servers. Communicator 18 is one example of a first communicator that transmits the notification signal generated by generator 11 to first server 60. There are no particular limitations on the configuration of communicator 18, as long as it is possible to carry out communications with the other apparatuses and the like via network 90. In other words, there are no particular limitations on communicator 18, as long as the communicator is compliant with standards or the like used by network 90.

Second device 20 is one example of the apparatuses and a device selected by first server 60 as one of devices capable of presenting the notification information to the user who is in a presumed position presumed as the position of the user, when first device 10 has transmitted a notification signal including the notification information that is to be provided to the user. Second device 20 is the apparatus capable of presenting the notification information to the user who is in the presumed position among the plurality of apparatuses. The apparatus corresponding to second device 20 differs depending on the position of the user. In other words, the apparatus corresponding to second device 20 differs depending on the movement of the user. Thus, second device 20 is the apparatus temporality identified based on the behavior of the user. Second device 20 includes controller 22, interface 24, sensor unit 26, and communicator 28.

Controller 22 is, like controller 12 of first device 10, a processing unit that controls primary operations of second device 20.

Interface 24, like interface 14 of first device 10, transfers information between the user and second device 20. In the present embodiment, interface 24 includes a display that displays a notification image corresponding to the notification information.

Sensor unit 26, like sensor unit 16 of first device 10, senses whether any person is present and generates a presence-absence signal including person presence-absence information.

Communicator 28, like communicator 18 of first device 10, carriers out communications with the other apparatuses and the one or more servers. Communicator 28 is one example of a second communicator that receives a presentation signal including the notification information transmitted from first server 60.

First server 60 is one example of the servers and includes information acquirer 61 and presentation controller 66. In the present embodiment, first server 60 further includes device information database 63. In FIG. 1 and other drawings, the device information database is expressed as "device information DB".

Information acquirer 61 receives the notification signal and the presence-absence signal from first device 10 and acquires information including the notification information included in the notification signal and the presence-absence information included in the presence-absence signal. Information acquirer 61 outputs the notification information and the presence-absence information to device information database 63.

Device information database 63 accumulates the notification information and the presence-absence information acquired by information acquirer 61.

Presentation controller 66 determines a presumed position as the position of the user presumed based on the user information and the person presence-absence information accumulated in device information database 63. Specifically, the position at which it is presumed on the basis of the presence-absence information that any person is present may be determined as the presumed position.

Presentation controller 66 determines the presumed position of the user as described above and causes one of apparatuses that are capable of presenting the notification information to the user who is in the presumed position among the plurality of apparatuses, i.e., second device 20, to present the notification information. That is, presentation controller 66 selects, as second device 20, the apparatus that is capable of presenting sounds, images, or the like to the presumed position, and transmits a presentation signal corresponding to the notification information to second device 20. Presentation controller 66 may also select and transmit part of the notification information to second device 20, or may transmit information indicating the form of notification of the notification information, along with the notification information. Presentation controller 66 further changes the form of presentation in accordance with presentation setting information that is information about the person who is in the presumed position. How the presentation controller changes the form of presentation will be described later in detail.

Sensors 50a and 50b each sense whether any person is present and generate a presence-absence signal including person presence-absence information. For example, sensors 50a and 50b may be human sensing sensors. Sensors 50a and 50b may also discriminate between one or more persons and generate a presence-absence signal including presence-absence information about each of the one or more persons. In this case, sensors 50a and 50b may include an image capturing device and an image processor and discriminate the user by capturing an image of the user with the image capturing device and processing the captured image by the image processor.

### [1-2. Information Notification Method]

Next, an information notification method using information notification system 1 according to the present embodiment will be described with reference to FIGS. 2, 3A, 3B, and 4. FIG. 2 is a schematic diagram illustrating an exemplary configuration of information notification system 1 according to the present embodiment and an exemplary operation thereof. FIGS. 3A and 3B are diagrams respectively illustrating one and another examples of a notification image displayed on interface 24 of second device 20 according to the present embodiment. FIG. 4 is a flowchart of the information notification method according to the present embodiment.

Information notification system 1 illustrated in FIG. 2 includes first server 60 and a plurality of apparatuses. The plurality of apparatuses include first device 10, second device 20, apparatuses 30b and 30d, and sensors 50a and 50b, which are located in given house 80. House 80 includes rooms A to D. First device 10 and sensor 50a are located in room A. Equipment or device 30b and sensor 50b are located in room B. Second device 20 is located in room C. Equipment or device 30d is located in room D.

In the present exemplary configuration, first server 60 is provided outside house 80 via network 90 (not shown in FIG. 2).

First device 10 and second device 20 are a washing machine and an air cleaner, respectively. Interface 24 of second device 20 includes a touch panel. Interface 24 may receive input of information for use in identifying the user.

Equipment or devices 30b and 30d are an electromagnetic range and an air conditioner, respectively.

In the information notification method according to the present embodiment, first, first device 10 in information notification system 1 is operated by a user as illustrated in FIG. 4. In response to this, generator 11 of first device 10 generates a notification signal including notification information (S12). In the exemplary configuration illustrated in FIG. 2, when user U0 has operated interface 14 of first device 10, i.e., the washing machine, first device 10 starts to operate in accordance with the operation of user U0. Generator 11 of first device 10 generates a notification signal that includes notification information corresponding to the operation.

Then, as illustrated in FIG. 4, the plurality of apparatuses in information notification system 1 each sense whether any person is present and generate a presence-absence signal including person presence-absence information (S14). In the exemplary configuration illustrated in FIG. 2, whether any person is present near each apparatus is sensed on the basis of the presence-absence signals received from first device 10, second device 20, apparatuses 30b and 30d, and sensors 50a and 50b included in the plurality of apparatuses.

In the exemplary configuration illustrated in FIG. 2, a description is given of the operation performed by information notification system 1 when user U0 who uses first device 10 located in room A has operated first device 10 and then moved to room C.

In this case, after user U0 has operated first device 10 in room A and moved to room C, first device 10 senses with at least one of interface 14 or sensor unit 16 that any person such as user U0 is not present near first device 10. Similarly, sensor 50a senses that any person such as user U0 is not present near the sensor. Thus, first device 10 transmits, to first server 60, a notification signal that includes notification information corresponding to the operation of user U0 and a presence-absence signal that includes presence-absence information indicating that any person is not present near first device 10. Sensor 50a transmits, to first server 60, a presence-absence signal that includes presence-absence information indicating that any person is not present near sensor 50a.

Equipment or device 30b and sensor 50b, located in room B, each transmit, to first server 60, a presence-absence signal that includes presence-absence information indicating that any person such as user U0 is not present near the apparatus or the sensor. Equipment or device 30d located in room D transmits, to first server 60, a presence-absence signal that includes presence-absence information indicating that any person such as user U0 is not present near apparatus 30d. As described above, whether any person such as user U0 is present in each room can be sensed using the plurality of apparatuses.

Then, as illustrated in FIG. 4, information acquirer 61 of first server 60 receives the notification signal and the presence-absence signals and acquires the notification information included in the notification signal and the presence-absence information included in the presence-absence signal (S16). In the exemplary configuration illustrated in FIG. 2, first server 60 receives the notification signal from first device 10 and receives the presence-absence signals from first device 10, second device 20, apparatuses 30b and 30d, and sensors 50a and 50b. First server 60 also acquires the notification information and the presence-absence information from each signal. Note that first device 10 is not identified until first server 60 receives the notification signal. In the example illustrated in FIG. 2, when first server 60 has received the notification signal, the washing machine, which is the apparatus serving as the transmission source of the notification signal, is identified as first device 10.

Referring back to FIG. 4, presentation controller 66 of first server 60 determines the position of the person presumed based on the user information and the presence-absence information, i.e., a presumed position, and selects second device 20 as one of apparatuses that are capable of presenting the notification information to the person who is in the presumed position among the plurality of apparatuses. Presentation controller 66 changes the form of presentation in accordance with presentation setting information that is information about the person who is in the presumed position. In the present embodiment, the presentation setting information includes presence-absence information. To be more specific, the presentation setting information includes distance D0 from the presumed position of the user to second device 20. Second device 20 also includes a display that displays a notification image corresponding to the notification information.

Presentation controller 66 determines whether distance D0 is less than a predetermined threshold value (S18). If distance D0 is less than the predetermined threshold value (Yes in S18), presentation controller 66 presents short-distance notification information (S20). On the other hand, if distance D0 is greater than or equal to the predetermined threshold value (No in S18), presentation controller 66 presents long-distance notification information (S22). Here, as the form of presentation of the notification information, the form of a notification image will be described with reference to FIGS. 3A and 3B.

The notification image illustrated in FIG. 3A is one example of the form of presentation of the long-distance notification information, and includes only character information indicating the remaining time for laundry. On the other hand, the notification image illustrated in FIG. 3B is one example of the form of presentation of the short-distance notification information, and includes information such as the course name of laundry operations ("standard course") and characters indicating the time required for each operation and the remaining time, the information being displayed with smaller characters than numerals illustrated in FIG. 3A.

If distance D0 from the presumed position of user U0 to second device 20 is greater than the predetermined threshold value, presentation controller 66 causes second device 20 to present a notification image with a small amount of information as illustrated in FIG. 3A, because it is difficult for user U0 to read small characters displayed on the display of second device 20. On the other hand, if distance D0 is less than the predetermined threshold value, presentation controller 66 causes second device 20 to present a notification image with a large amount of information as illustrated in FIG. 3B, because user U0 is able to read small characters displayed on the display of second device 20. The predetermined threshold value may be appropriately set depending on the configuration of the display or the like, and may be approximately 1 m, for example.

As described above, the notification information received from first device 10 can be presented via the other apparatus, i.e., second device 20, to user U0 who uses first device 10. As the notification information, for example, it is possible to provide information or the like that indicates the completion of laundry at first device 10, i.e., the washing machine. This enables user U0, even if away from first device 10, to immediately know the completion of laundry.

Information notification system 1 and the information notification method using this system according to the present embodiment make is possible to provide the notification information with an appropriate amount of information for distance D0 from user U0 to second device 20. Accordingly, the notification information can be presented with appropriate sizes, e.g., character sizes, for distance D0 from user U0 to second device 20. That is, it is possible to present the notification information in an appropriate form.

Note that the configuration of information notification system 1 and the information notification method according to the present embodiment are not limited thereto. For example, in the exemplary configuration described above, although presentation controller 66 changes the notification image in accordance with the relationship between distance D0 and the predetermined threshold value, controller 22 of second device 20 may change the notification image. Specifically, if distance D0 is less than the predetermined threshold value, controller 22 of second device 20 may control interface 24 so as to present the notification image as instructed by presentation controller 66, and if distance D0 is greater than the predetermined threshold value, controller 22 of second device 20 may control interface 24 so as to present the notification information with a reduced amount of information.

In the exemplary configuration described above, although presentation controller 66 presents the notification information in the form of a notification image, the notification information may be presented by sounds. For example, second device 20 may include a sound ejector that ejects notification sounds corresponding to the notification information. In the case where distance D0 from the presumed position of user U0 to second device 20 is less than the predetermined threshold value, presentation controller 66 may cause second device 20 to lower the volume level of notification sounds from the volume level used in the case where distance D0 is greater than or equal to the predetermined threshold value. Also, presentation controller 66 may cause second device 20 to increase the volume level of notification sounds with increasing distance D0 from the presumed position of user U0 to second device 20. By so doing, when user U0 is present relatively near second device 20, the notification information is presented at a relatively low volume level and accordingly user U0 feels less annoyed by the notification. When user U0 is present relatively away from second device 20, the notification information is presented at a relatively high volume level, which reduces the occurrence of a situation in which user U0 cannot here the notification information.

As described above, information notification system 1 and the information notification method using this system according to the present embodiment make it possible to present the notification information in an appropriate form of presentation in accordance with conditions relating to the user.

### [Embodiment 2]

An information notification system and an information notification method according to Embodiment 2 will be described. The information notification system and the information notification method according to the present embodiment differ from information notification system 1 and the information notification method according to Embodiment 1 mainly in that the user is discriminated based on the presence-absence information. The following description of the information notification system and the information notification method according to the present embodiment focuses on the differences from information notification system 1 and the information notification method according to Embodiment 1.

### [2-1. Configuration]

First, a configuration of the information notification system according to the present embodiment will be described with reference to FIG. 5. FIG. 5 is a block diagram illustrating a functional configuration of information notification system 101 according to the present embodiment. As illustrated in FIG. 5, information notification system 101 according to the present embodiment, like information notification system 1 according to Embodiment 1, includes a plurality of apparatuses and one or more servers. In the present embodiment, each of at least one of the plurality of apparatuses discriminates between one or more persons and generates a presence-absence signal including presence-absence information about each of the one or more persons. Information notification system 101 includes first device 10, second device 20, and sensors 50a and 50b. The one or more servers include first server 160.

In the present embodiment, the notification signal generated by generator 11 of first device 10 includes user information for use in identifying user, in addition to the notification information that is to be provided to the user who uses first device 10. The user information is information for use in identifying a person who has used first device 10. For example, the user information may be information identified based on a signal input to interface 14 by the user. The user information may be information about the user, acquired by sensor unit 16 of first device 10. For example, in the case where sensor unit 16 includes an image capturing device or the like, the user information may be information based on a captured image of the user.

First server 160 includes information acquirer 61, presentation controller 166, discriminator 62, and device information database 63.

Presentation controller 166 according to the present embodiment determines the position of a person presumed based on the user information and the presence-absence information, i.e., a presumed position, and causes one of apparatuses that are capable of presenting the notification information to the person who is in the presumed position among the plurality of apparatuses, i.e., second device 20, to present the notification information.

Discriminator 62 discriminates the user on the basis of the user information acquired by information acquirer 61. Discriminator 62 associates the user with the notification information acquired by information acquirer 61. For example, the user information may include image information about the user, and discriminator 62 may discriminate the user on the basis of the image information. Discriminator 62 may use this image information and image information included in the presence-absence information generated by the other apparatuses to sense whether the user is present near the other apparatuses.

### [2-2. Information Notification Method]

Next, the information notification method using information notification system 101 according to the present embodiment will be described with reference to FIG. 6. FIG. 6 is a schematic diagram illustrating an exemplary configuration of information notification system 101 according to the present embodiment and an exemplary operation thereof.

Information notification system 101 illustrated in FIG. 6 includes first server 160 and a plurality of apparatuses. The plurality of apparatuses include first device 10, second device 20, apparatuses 30b and 30d, and sensors 50a and 50b, which are located in given house 80. House 80 includes rooms A to D. First device 10 and sensor 50a are located in room A. Equipment or device 30b and sensor 50b are located in room B. Second device 20 is located in room C. Equipment or device 30d is located in room D.

First device 10, second device 20, apparatus 30d, sensors 50a and 50b have similar configurations to the configurations of first device 10, second device 20, apparatus 30d, and sensors 50a and 50b according to Embodiment 1. In the present embodiment, apparatus 30b located in room B is an electromagnetic range. Equipment or device 30b is used by person U1 different from user U0.

In the present exemplary configuration, first, when user U0 has operated interface 14 of first device 10, i.e., the washing machine, first device 10 starts to operate in accordance with the operation of user U0. Generator 11 of first device 10 generates a notification signal that includes notification information corresponding to the operation and user information corresponding to user U0.

Then, in the exemplary configuration illustrated in FIG. 6, whether user U0 is present near each apparatus is sensed by detecting whether any person is present near each apparatus on the basis of the presence-absence signals received from first device 10, second device 20, apparatuses 30b and 30d, and sensors 50a and 50b included in the plurality of apparatuses and discriminating user U0 on the basis of the image information or other information.

In the exemplary configuration illustrated in FIG. 6, a description is given of the operation performed by information notification system 101 when user U0 who uses first device 10 located in room A has operated first device 10 and then moved to room C.

In this case, after user U0 has operated first device 10 in room A and moved to room C, first device 10 senses with at least one of interface 14 or sensor unit 16 that user U0 is not present near first device 10. Similarly, sensor 50a senses that user U0 is not present near the sensor. Thus, first device 10 transmits, to first server 160, a notification signal that includes notification information corresponding to the operation of user U0 and user information indicating that the first device is used by user U0, and a presence-absence signal that includes presence-absence information indicating that user U0 is not present near first device 10. Sensor 50a transmits, to first server 160, a presence-absence signal that includes presence-absence information indicating that user U0 is not present near sensor 50a.

Equipment or device 30b and sensor 50b, located in room B, each transmit, to first server 160, a presence-absence signal that includes presence-absence information indicating that user U0 is not present near the apparatus or the sensor and that person U1 different from user U0 is near the apparatus or the sensor. Specifically, apparatus 30b and sensor 50b each may transmit image information about person U1 or information indicating features of the image as the presence-absence information, or in the case where it is possible to identify person U1 corresponding to the image, may transmit information indicating that identified person U1 is near the apparatus or the sensor as the presence-absence information. Second device 20 located in room C transmits, to first server 160, a presence-absence signal that includes presence-absence information indicating that user U0 is present near the second device. Specifically, second device 20 may transmit image information about user U0 or information indicating features of the image as the presence-absence information, or in the case where it is possible to identify user U0 corresponding to the image, information indicating that identified user U0 is present near the second device may be transmitted as the presence-absence information. Also, distance D0 from user U0 to second device 20 may be transmitted as presentation setting information. Equipment or device 30d located in room D transmits, to first server 160, a presence-absence signal that includes presence-absence information indicating that user U0 is not present near apparatus 30d. As described above, whether user U0 is present in each room can be sensed using the plurality of apparatuses.

Then, first server 160 receives the notification signal from first device 10 and the presence-absence signals from first device 10, second device 20, apparatuses 30b and 30d, and sensors 50a and 50b. First server 160 also acquires the user information, the notification information, and the presence-absence information from each signal.

Then, on the basis of the user information received from first device 10 and the presence-absence information received from second device 20, first server 160 presumes that user U0 who uses first device 10 is present in room C. That is, first server 160 determines room C as the presumed position of user U0. First server 160 selects second device 20 as one of apparatuses capable of presenting the notification information to user U0 who is in the presumed position. That is, first server 160 identifies the air cleaner, which is the apparatus located in room C, as second device 20 on the basis of the presumed position of user U0. Then, first server 160 transmits, to second device 20, a presentation signal including notification information that is to be presented by second device 20. Here, as in Embodiment 1, presentation controller 166 of first server 160 changes the form of presentation in accordance with the presentation setting information, which is the information about user U0 who is in the presumed position.

Second device 20 receives the presentation signal and presents the notification information included in the presentation signal to user U0. For example, second device 20 presents the notification information via interface 24.

Accordingly, information notification system 101 and the information notification method using this system according to the present embodiment can achieve similar effects to the effects achieved by information notification system 1 and the information notification method using this system according to Embodiment 1.

According to information notification system 101 and the information notification method using this system according to the present embodiment, user U0 who uses first device 10 is discriminated, and notification information is presented only to second device 20, which is the apparatus located near user U0. This reduces the possibility that the notification information may be presented to the other persons such as person U1. Accordingly, it is possible to reduce the occurrence of a situation in which persons other than user U0 may feel annoyed by the notification.

Note that the configuration of information notification system 101 according to the present embodiment is not limited thereto. For example, the presentation setting information may include at least one of the user information or the presence-absence information. In the case where the presentation setting information includes the user information, presentation controller 166 may change the form of presentation depending on the user. For example, in the case where the user is an aged person, a notification image with a smaller amount of information than in the case where the user is not an aged person may be presented, because it may be difficult for the user to read small characters. In the case where the user is an aged person, notification information may be presented at a higher volume level of sounds than in the case where the user is not an aged person, because it may be difficult for the user to hear quiet sounds. Accordingly, it is possible to present notification information in a more appropriate form of presentation depending on the user.

### [Embodiment 3]

An information notification system and an information notification method according to Embodiment 3 will be described. The information notification system and the information notification method according to the present embodiment differ from information notification system 101 and the information notification method according to Embodiment 2 mainly in that the first server causes the second device to present notification information via another server. The following description of the information notification system and the information notification method according to the present embodiment focuses on the differences from information notification system 101 and the information notification method according to Embodiment 2.

### [3-1. Configuration]

First, a configuration of the information notification system according to the present embodiment will be described with reference to FIG. 7. FIG. 7 is a block diagram illustrating a functional configuration of information notification system 201 according to the present embodiment. As illustrated in FIG. 7, information notification system 201 according to the present embodiment, like information notification system 101 according to Embodiment 2, a plurality of apparatuses and one or more servers.

In the present embodiment, the plurality of apparatuses include first device 10, second device 120, and sensors 50a and 50b as illustrated in FIG. 7. The one or more servers include first server 260 and second server 70.

First server 260 includes information acquirer 61, presentation controller 266, discriminator 62, and device information database 63.

Presentation controller 266 according to the present embodiment, like presentation controller 166 according to Embodiment 2, determines the position of a person presumed based on the user information and the presence-absence information, i.e., a presumed position, and causes one of apparatuses that are capable of presenting the notification information to the person who is in the presumed position among the plurality of apparatuses, i.e., second device 120, to present the notification information. In the present embodiment, presentation controller 266 causes second device 120 to present the notification information via second server 70. In this way, presentation controller 266 according to the present embodiment is capable of causing the apparatuses operated by the other server to provide the notification information.

Second server 70 is a server that controls second device 120, and includes database 72. In FIG. 7 and other drawings, the database is expressed as "DB".

Database 72 is a database in which data for use in controlling second device 120 is accumulated. Database 72 receives signals from external devices and controls second device 120 on the basis of the received signals. In the present embodiment, database 72 receives a presentation signal from first server 260, converts the received presentation signal into a presentation signal for allowing second device 120 to perform operations corresponding to the presentation signal, and transmits the converted presentation signal to second device 120.

Second device 120 is, like second device 20 according to Embodiment 2, one example of the apparatuses, and receives the presentation signal from second server 70 and presents the notification information on the basis of the presentation signal. In the present embodiment, second device 120 is, for example, a so-called smart speaker or smart display controlled by second server 70. Second device 120, like second device 20 according to Embodiment 1, incudes controller 122, interface 124, sensor unit 126, and communicator 128.

Controller 122 is, like controller 22 according to Embodiment 2, a processing unit that controls primary operations of second device 120.

Interface 124, like interface 24 according to Embodiment 2, transfers information between the user and second device 120. For example, in the case where second device 120 is a smart speaker, interface 124 includes a microphone that receives sounds, and a sound ejector (in other words, a speaker) that ejects sounds on the basis of signals received from controller 122 and second server 70. In the case where second device 120 is a smart display, interface 124 includes a microphone that receives sounds, a sound ejector that ejects sounds on the basis of signals received from controller 122 and second server 70, and a display that displays an image on the basis of the signals received from controller 122 and second server 70.

Sensor unit 126, like sensor unit 26 according to Embodiment 2, discriminates between one or more persons and generates a presence-absence signal including presence-absence information about each of the one or more persons.

Communicator 128 carries out communications with the other apparatuses and the one or more servers. Communicator 128 is one example of a second communicator that receives a presentation signal including the notification information transmitted from first server 260. Communicator 128 receives the presentation signal including the notification information transmitted from first server 260 via second server 70.

### [3-2. Information Notification Method]

Next, the information notification method using information notification system 201 according to the present embodiment will be described with reference to FIG. 8. FIG. 8 is a schematic diagram illustrating an exemplary configuration of information notification system 201 according to the present embodiment and an exemplary operation thereof.

Information notification system 201 illustrated in FIG. 8 includes first server 260, second server 70, and a plurality of apparatuses. The plurality of apparatuses include first device 10, second device 120, apparatuses 30b, 30c, and 30d, and sensors 50a and 50b, which are located in given house 80. House 80 includes rooms A to D. First device 10 and sensor 50a are located in room A. Equipment or device 30b and sensor 50b are located in room B. Second device 120 and apparatus 30c are located in room C. Equipment or device 30d is located in room D.

Each apparatus located in rooms A, B, and D is similar to each apparatus located in rooms A, B, and D in the exemplary configuration illustrated in FIG. 6. In the present exemplary configuration, apparatus 30c and second device 120 are located in room C. Equipment or device 30c is, for example, an air cleaner. Second device 120 is, for example, a smart speaker.

In the present exemplary configuration, a description is given of the information notification method performed when user U0 has operated first device 10 and then moved to room C as in the exemplary configuration illustrated in FIG. 6.

First, user U0 operates interface 14 of first device 10, i.e., the washing machine. Generator 11 of first device 10 generates a notification signal that includes notification information corresponding to the operation and user information corresponding to user U0.

Then, whether the user is present near each apparatus is sensed by detecting whether any person is present near each apparatus and discriminating the user on the basis of image information or other information.

After user U0 has moved from room A to room C, first device 10 transmits, to first server 260, a notification signal that includes notification information corresponding to the operation of user U0 and user information indicating that the first device is used by user U0, and a presence-absence signal that includes presence-absence information indicating that user U0 is not present near first device 10.

Equipment or device 30b and sensor 50b, located in room B, each transmit, to first server 260, a presence-absence signal that includes presence-absence information indicating that user U0 is not present near the apparatus or the sensor and that person U1 different from user U0 is present near the apparatus or the sensor. At least one of second device 120 or apparatus 30, located in room C, transmits, to first server 260, a presence-absence signal that includes presence-absence information indicating that user U0 is present near the second device or the apparatus. Equipment or device 30d located in room D transmits, to first server 260, a presence-absence signal that includes presence-absence information indicating that user U0 is not present near apparatus 30d. As described above, whether user U0 is present in each room can be sensed using the plurality of apparatuses.

Then, first server 260 receives the notification signal from first device 10 and the presence-absence signals from first device 10, second device 120, apparatuses 30b, 30c, and 30d, and sensors 50a and 50b. First server 260 also acquires the user information, the notification information, and the presence-absence information from each signal. Note that first server 260 may receive the presence-absence signal from second device 120 via second server 70.

Then, on the basis of the user information received from first device 10 and the presence-absence information received from at least one of second device 120 or apparatus 30c, first server 260 presumes that user U0 who uses first device 10 is present in room C. That is, first server 260 determines room C as the presumed position of user U0. First server 260 selects second device 120 as one of apparatuses capable of presenting the notification information to user U0 who is in room C and transmits, to second server 70 serving as a server for controlling second device 120, a presentation signal including notification information that is to be presented by second device 120. Second server 70 receives the presentation signal from first server 160, converts the received presentation signal into a presentation signal corresponding to second device 120, and transmits the converted presentation signal to second device 120.

In the present embodiment as well as in Embodiment 2, presentation controller 266 of first server 260 changes the form of presentation in accordance with the presentation setting information, which is the information about user U0 who is in the presumed position.

Second device 120 receives the converted presentation signal and presents the notification information included in the presentation signal to user U0. For example, second device 120 presents the notification information by sounds via interface 124.

Accordingly, information notification system 201 and the information notification method using this system according to the present embodiment can achieve similar effects to the effects achieved by information notification system 101 and the information notification method using this system according to Embodiment 2.

### [Embodiment 4]

An information notification system and an information notification method according to Embodiment 4 will be described. The information notification system and the information notification method according to the present embodiment differ from information notification system 201 and the information notification method according to Embodiment 3 mainly in that notification is provided in consideration of the behavior of a user. The following description of the information notification system and the information notification method according to the present embodiment focuses on the differences from information notification system 201 and the information notification method according to Embodiment 3.

### [4-1. Configuration]

First, a configuration of the information notification system according to the present embodiment will be described with reference to FIG. 9. FIG. 9 is a block diagram illustrating a functional configuration of information notification system 301 according to the present embodiment. As illustrated in FIG. 9, information notification system 301 according to the present embodiment, like information notification system 201 according to Embodiment 3, includes a plurality of apparatuses and one or more servers.

In the present embodiment, the plurality of apparatuses include first device 10, second device 120, and sensors 50a and 50b as illustrated in FIG. 9. The one or more servers include first server 360 and second server 70.

First server 360 includes information acquirer 61, presentation controller 366, discriminator 62, device information database 63, behavior extractor 64, and behavior information database 65.

Behavior extractor 64 extracts behavior information that is information about the behavior of the user who uses first device 10, on the basis of the user information, the notification information, and the presence-absence information accumulated in device information database 63.

Behavior information database 65 accumulates behavior information about each user, extracted by behavior extractor 64. For example, behavior information database 65 may accumulate the behavior information about each user over a predetermined period of time and delete the information in order from the older piece of information.

Presentation controller 366 according to the present embodiment, like presentation controller 266 according to Embodiment 3, determines the position of a person presumed based on the user information and the presence-absence information, i.e., a presumed position, and causes one of apparatuses that are capable of presenting the notification information to the person who is in the presumed position among the plurality of apparatuses, i.e., second device 120, to present the notification information. In the present embodiment, presentation controller 366 also uses the behavior information accumulated in behavior information database 65 as a basis to cause second device 120 to present the notification information. Presentation controller 366 determines a predetermined behavior as a standby target behavior. If the presumed behavior of user U0 matches the standby target behavior, presentation controller 366 does not cause second device 120 to present the notification information, and if the presumed behavior of user U0 is a behavior other than the standby target behavior, presentation controller 366 causes second device 120 to present the notification information. Presentation controller 366 also determines a predetermined position as a standby target position. If the presumed position of the user matches the standby target position, presentation controller 366 does not cause second device 20 to present the notification information, and if the presumed position is a position other than the standby target position, presentation controller 366 causes second device 20 to present the notification information. Specific operations of presentation controller 366 will be described later in detail.

### [4-2. Information Notification Method]

Next, the information notification method using information notification system 301 according to the present embodiment will be described with reference to FIGS. 10 and 11. FIG. 10 is a schematic diagram illustrating an exemplary configuration of information notification system 301 according to the present embodiment and an exemplary operation thereof. FIG. 11 is a flowchart of the information notification method according to the present embodiment.

In the exemplary configuration illustrated in FIG. 10, information notification system 301 includes first server 360, second server 70, and a plurality of apparatuses. The plurality of apparatuses include first device 10, second device 120, and apparatuses 30b, 30c, and 30d, which are located in given house 80. First device 10 is located in room A. Equipment or device 30b is located in room B. Second device 120 and apparatus 30c are located in room C. Equipment or device 30d is located in room D.

First device 10 and second device 120 are a washing machine and a smart speaker, respectively. Equipment or devices 30b, 30c, and 30d are a bath water heater, a refrigerator, and an air conditioner, respectively.

In the information notification method according to the present embodiment, first, first device 10 of information notification system 301 is operated by a user as illustrated in FIG. 11. In response to this, generator 11 of first device 10 generates a notification signal including notification information and user information (S12). In the exemplary configuration illustrated in FIG. 10, when user U0 has operated interface 14 of first device 10, i.e., the washing machine, first device 10 starts to operate in accordance with the operation of user U0. Generator 11 of first device 10 generates a notification signal that includes notification information corresponding to the operation and user information corresponding to user U0.

Then, as illustrated in FIG. 11, the plurality of apparatuses in information notification system 301 each discriminate between one or more persons and generate a presence-absence signal including presence-absence information about each of the one or more persons (S14). In the exemplary configuration illustrated in FIG. 10, whether user U0 is present near each apparatus is sensed by detecting whether any person is present in each apparatus on the basis of the presence-absence signals received from first device 10, second device 120, and apparatuses 30b, 30c, and 30d included in the plurality of apparatuses and discriminating user U0 on the basis of image information or other information.

In the exemplary configuration illustrated in FIG. 10, a description is given of the operation performed by information notification system 301 when user U0 who uses first device 10 located in room A has operated first device 10 and then moved to room B and further to room C.

In this case, after user U0 has operated first device 10 in room A and moved to room B, first device 10 senses with at least one of interface 14 or sensor unit 16 that user U0 is not present near first device 10. Similarly, sensor 50a senses that user U0 is not present near the sensor. Thus, first device 10 transmits, to first server 360, a notification signal that includes notification information corresponding to the operation of user U0 and user information indicating that the first device is used by user U0, and a presence-absence signal that includes presence-absence information indicating that user U0 is not present near first device 10. Sensor 50a transmits, to first server 360, a presence-absence signal that includes presence-absence information indicating that user U0 is not present near sensor 50a.

Equipment or device 30b located in room B transmits, to first server 360, a presence-absence signal that includes presence-absence information indicating that user U0 is present near the apparatus. Second device 120 and apparatus 30c, located in room C, each transmit, to first server 360, a presence-absence signal that includes presence-absence information indicating that user U0 is not present near the second device or the apparatus. Equipment or device 30d located in room D transmits, to first server 360, a presence-absence signal that includes presence-absence information indicating that user U0 is not present near apparatus 30d. As described above, whether user U0 is present in each room can be sensed using the plurality of apparatuses.

Then, as illustrated in FIG. 11, information acquirer 61 of first server 360 receives the notification signal and the presence-absence signals and acquires the user information and the notification information, which are included in the notification signal, and the presence-absence information, which is included in the presence-absence signal (S16). In the exemplary configuration illustrated in FIG. 10, first server 360 receives the notification signal from first device 10 and the presence-absence signals from first device 10, second device 120, apparatuses 30b, 30c, and 30d. First server 360 also acquires the user information, the notification information, and the presence-absence information from each signal.

Then, as illustrated in FIG. 11, presentation controller 366 of first server 360 presumes the behavior of the user (S218). Specifically, the behavior of the person is presumed based on the user information and the presence-absence information. In the example illustrated in FIG. 10, room B, i.e., the bathroom, is determined as the presumed position of user U0 on the basis of the presence-absence information received from apparatus 30b. From this, behavior extractor 64 presumes that the current behavior of user U0 is taking a bath. Behavior information database 65 accumulates the behavior information indicating that user U0 is taking a bath.

Presentation controller 366 determines room B as the presumed position of user U0 and determines taking a bath as the presumed behavior on the basis of the presence-absence information received from device information database 63 and the behavior information received from behavior information database 65.

Then, presentation controller 366 determines whether the presumed behavior of user U0 matches the standby target behavior during which notification is waited for, or determines whether the presumed position of user U0 matches the standby target position (S220). The standby target behavior as used herein refers to, among behaviors of user U0, an inappropriate behavior for user U0 to receive the notification information. For example, in the case where user U0 exhibits a behavior such as taking a bath, even if notification information is presented, it is difficult for the user to take immediate action for the notification information. That is, it is difficult for user U0 to immediately move from room B, i.e., the bathroom, to room A where first device 10 is located. Accordingly, in the present exemplary configuration, the behavior of taking a bath is determined as the standby target behavior. The standby target position as used herein refers to, among presumed positions of user U0, an inappropriate position for user U0 to receive the notification information. For example, in the case where the presumed position of user U0 is room B, i.e., the bathroom, it is presumed that user U0 is taking a bath. Thus, even if notification information is presented, it is difficult for user U0 to take immediate action for the notification information, as in the above-described case of the standby target behavior. Accordingly, in the present exemplary configuration, room B, i.e., the bathroom, is determined as the standby target position.

Accordingly, if the presumed behavior of user U0 matches the standby target behavior or if the presumed position of user U0 matches the standby target position (Yes in S220), the procedure returns to step S14, in which whether user U0 is present is sensed again. That is, presentation controller 366 waits until user U0 completes the standby target behavior or until the presumed position of user U0 becomes out of the standby target position, before presenting the notification information. In this way, if the presumed behavior of user U0 matches the standby target behavior or if the presumed position of user U0 matches the standby target position, presentation controller 366 of first server 360 does not cause second device 120 to present the notification information.

In the example illustrated in FIG. 10, while user U0 is in room B, i.e., the bathroom, it is determined that user U0 is taking a bath, i.e., exhibits the standby target behavior (or the user is in the standby target position), so that the presentation of the notification information is waited for.

As illustrated in FIG. 11, if the presumed behavior of user U0 is not the standby target behavior or if the presumed position of user U0 is not the standby target position (No in S220), presentation controller 366 proceeds to the step of presenting the notification information in accordance with the presentation setting information in the same manner as in the information notification method according to Embodiment 1.

In the example illustrated in FIG. 10, when it is sensed on the basis of the presence-absence information or other information that user U0 has moved from room B to room C, presentation controller 366 determines that the presumed behavior of user U0 is not the standby target behavior (or the presumed position of the user is not the standby target position) and presents the notification information. In the exemplary configuration illustrated in FIG. 10, presentation controller 366 causes second device 120 located near user U0 to present the notification information.

In this way, if the presumed behavior of user U0 is a behavior other than the standby target behavior or if the presumed position of user U0 is a position other than the standby target position, presentation controller 366 of first server 360 causes second device 120 to present the notification information.

Then, in the present embodiment as well, step S18 and step S20 or S22 are performed in the same manner as in Embodiment 1. Here, presentation controller 366 of first server 360 changes the form of presentation in accordance with the presentation setting information, which is the information about user U0 who is in the presumed position, in the same manner as in Embodiment 1 or 2.

As described above, information notification system 301 and the information notification method according to the present embodiment can achieve similar effects to the effects achieved by information notification system 201 and the information notification method according to Embodiment 3.

Moreover, in information notification system 301 and the information notification method according to the present embodiment, the presentation of the notification information is waited for if conditions are not appropriate for the presentation of the notification information. This reduces the occurrence of a situation in which it is difficult to make effective use of the presentation of the notification information. That is, information notification system 301 and the information notification method according to the present embodiment enable presenting the notification information with more efficiency.

### [Variations]

Each of the one or more servers may be located inside a predetermined space such as a house, or may be integrated with one or more apparatuses.

The sensor units of the apparatuses may have the same configuration, or may have different configurations.

Each step in the information notification methods according to the above-described embodiments and variations thereof may be executed by a computer (computer system). The present disclosure may be implemented as a program for causing a computer to execute the steps included in these methods. The present disclosure may also be implemented as a non-transitory computer-readable recording medium for recording that program, such as a CD-ROM.

For example, in the case where the present disclosure is implemented as a program (software), each step is executed by executing the program using hardware resources such as the CPU, memory, and input/output circuit of the computer. That is, each step is executed by the CPU acquiring and computing data from the memory or the input/output circuit and outputting the result of computation to the memory and the input/output circuit.

The plurality of constituent elements included in the information notification systems according to the above-described embodiments each may be implemented as a dedicated circuit or a general-purpose circuit. These constituent elements may be implemented as a single circuit, or may be implemented as a plurality of circuits.

The plurality of constituent elements included in the information notification systems according to the above-described embodiments may be implemented in the form of large scale integration (LSI), i.e., an integrated circuit (IC). These constituent elements may be individually packaged into a single chip, or some or all of them may be packaged into a single chip. LSI may also be referred to as a system LSI, a super LSI, or an ultra LSI depending on the degree of integration.

The integrated circuit is not limited to LSI, and may be implemented as a dedicated circuit or a general-purpose processor. As described above, it is possible to use a programmable FPGA or a reconfigurable processor capable of reconfiguring connection and settings of circuit cells inside LSI.

Moreover, if other circuit integration techniques that replace LSIs make their debuts with the advance of semiconductor technology or with derivation from another technology, such techniques may be used to integrate the constituent elements included in the information notification systems into an integrated circuit.

### [Industrial Applicability]

The information notification system and the like according to the present disclosure are applicable to, for example, an IoT system or the like using, for example, home appliances located in a house.

### [Reference Signs List]

1, 101, 201, 301 information notification system
10 first device
11 generator
12, 22, 122 controller
14, 24, 124 interface
16, 26, 126 sensor unit
18, 28, 128 communicator
20, 120 second device
30b, 30c, 30d apparatus
50a, 50b sensor
60, 160, 260, 360 first server
61 information acquirer
62 discriminator
63 device information database
64 behavior extractor
65 behavior information database
66, 166, 266, 366 presentation controller
70 second server
72 database
80 house
90 network

## Claims

1. An information notification system comprising:
a plurality of devices (10, 120) including a first device, each of the plurality of devices (10, 120) including
a sensor unit (16, 26) configured to sense whether a person is present and to generate a presence-absence signal including person presence-absence information, the first device (10) further including
a generator (11) configured to generate a notification signal including notification information that is to be provided to a user who uses the first device (10) and user information identifying said user,
the information notification system further comprising a server (360) including:
a behavior extractor (64) configured to extract behavior information that is information about a behavior of the user who uses first device (10), on the basis of the user information, the notification information, and the presence-absence information;
a behavior information database (65) configured to accumulate the behavior information extracted by the behavior extractor (64);
an information acquirer (61) configured to acquire the notification information included in the notification signal and the person presence-absence information included in the presence-absence signal; and
a presentation controller (366) configured
to determine a presumed position of the user based on the person presence-absence information,
to determine a presumed behavior of the user based on the person presence-absence information and the behavior information accumulated in the behavior information database (65),
to determine, by using the behavior information accumulated in behavior information database (65), a predetermined behavior as a standby target behavior,
to select a second device (120) among the plurality of devices (10, 120) that is capable of presenting the notification information to a person who is at the presumed position,
to causes a second device (120) to present the notification information,
to change a form of presentation in accordance with presentation setting information that is information about the person who is in the presumed position, and
to determine whether the presumed behavior matches the predetermined standby target behavior and to cause the second device (20) to present the notification information only if the presumed behavior is a behavior other than the standby target behavior.

2. The information notification system according to claim 1, wherein the presentation setting information includes the person presence-absence information.

3. The information notification system according to claim 1 or 2, wherein the second device (120) includes a display configured to display a notification image corresponding to the notification information.

4. An information notification method for use in an information notification system including
a server (360) and a plurality of devices (10, 120), the plurality of devices including a first device (10), the information notification method comprising:
sensing, at each of the plurality of devices (10, 120), whether a person is present and generating a presence-absence signal including person presence-absence information,
generating, at the first device (10), a notification signal including notification information that is to be provided to a user who uses the first device (10) and user information identifying said user,
extracting, at the server (360), behavior information that is information about a behavior of the user who uses first device (10), on the basis of the user information, the notification information, and the presence-absence information;
accumulating, in a behavior information database (65), the behavior information extracted by the behavior extractor (64);
acquiring, at the server (360), the notification information included in the notification signal and the person presence-absence information included in the presence-absence signal;
determining a presumed position of the user based on the person presence-absence information,
determining a presumed behavior of the user based on the person presence-absence information and the behavior information accumulated in the behavior information database (65),
determining, by using the behavior information accumulated in behavior information database (65), a predetermined behavior as a standby target behavior,
selecting a second device (120) among the plurality of devices (10, 120) that is capable of presenting the notification information to a person who is at the presumed position,
causing the second device (120) to present the notification information,
changing a form of presentation in accordance with presentation setting information that is information about the person who is in the presumed position, and
determining whether the presumed behavior matches the predetermined standby target behavior and causing the second device (120) to present the notification information only if the presumed behavior is a behavior other than the standby target behavior.

## Patentansprüche

1. System für Benachrichtigung über Informationen, das umfasst:
eine Vielzahl von Geräten (10, 120), die ein erstes Gerät einschließt, wobei jedes der Vielzahl von Geräten (10, 120) enthält:
eine Sensor-Einheit (16, 26) die so ausgeführt ist, dass sie erfasst, ob eine Person anwesend ist, und ein Anwesenheits/Abwesenheits-Signal erzeugt, das Informationen über Anwesenheit/Abwesenheit einer Person enthält,
wobei das erste Gerät (10) des Weiteren enthält:
eine Erzeugungseinrichtung (11), die so ausgeführt ist, dass sie ein Benachrichtigungs-Signal erzeugt, das Benachrichtigungs-Informationen, die einem Benutzer bereitgestellt werden sollen, der das erste Gerät (10) verwendet, sowie Benutzer-Informationen einschließt, die den Benutzer identifizieren,
wobei das System für Benachrichtigung über Informationen des Weiteren einen Server (360) umfasst, der einschließt:
eine Verhaltens-Extrahiereinrichtung (64) die so ausgeführt ist, dass sie Verhaltens-Informationen, die Informationen über ein Verhalten des Benutzers sind, der das erste Gerät (10) benutzt, auf Basis der Benutzer-Informationen, der Benachrichtigungs-Informationen sowie der Anwesenheits/Abwesenheits-Informationen extrahiert,
eine Datenbank (65) für Verhaltens-Informationen, die so ausgeführt ist, dass sie die durch die Verhaltens-Extrahiereinrichtung (64) extrahierten Verhaltens-Informationen akkumuliert;
eine Informations-Erfassungseinrichtung (61), die so ausgeführt ist, dass sie die in dem Benachrichtigungs-Signal enthaltenen Benachrichtigungs-Informationen und die in dem Anwesenheits/Abwesenheits-Signal enthaltenen Informationen über Anwesenheit/Abwesenheit einer Person erfasst; sowie
eine Darstellungs-Steuerungseinrichtung (366), die ausgeführt ist zum:
Bestimmen einer angenommenen Position des Benutzers auf Basis der Informationen über Anwesenheit/Abwesenheit einer Person,
Bestimmen eines angenommenen Verhaltens des Benutzers auf Basis der Informationen über Anwesenheit/Abwesenheit einer Person sowie der in der Datenbank (65) für Verhaltens-Informationen akkumulierten Verhaltens-Informationen,
Bestimmen eines vorgegebenen Verhaltens als ein Bereitschafts-Zielverhalten unter Verwendung der in der Datenbank (65) für Verhaltens-Informationen akkumulierten Verhaltens-Informationen,
Auswählen eines zweiten Gerätes (120) aus der Vielzahl von Geräten (10, 120) das in der Lage ist, die Benachrichtigungs-Informationen für eine Person darzustellen, die sich an der angenommenen Position befindet;
Veranlassen, dass ein zweites Gerät (120) die Benachrichtigungs-Informationen darstellt,
Ändern einer Form der Darstellung entsprechend Einstellungs-Informationen für die Darstellung, die Informationen über die Person sind, die sich an der angenommenen Position befindet, und
Feststellen, ob das angenommene Verhalten dem vorgegebenen Bereitschafts-Zielverhalten entspricht, und Veranlassen, dass das zweite Gerät (20), die Benachrichtigungs-Informationen nur dann darstellt, wenn das angenommene Verhalten ein anderes Verhalten als das Bereitschafts-Zielverhalten ist.

2. System für Benachrichtigung über Informationen nach Anspruch 1, wobei die Einstellungs-Informationen für die Darstellung die Informationen über Anwesenheit/Abwesenheit einer Person einschließen.

3. System für Benachrichtigung über Informationen nach Anspruch 1 oder 2, wobei das zweite Gerät (120) eine Anzeigeeinrichtung enthält, die so ausgeführt ist, dass sie ein den Benachrichtigungs-Informationen entsprechendes Benachrichtigungs-Bild anzeigt.

4. Verfahren für Benachrichtigung über Informationen zum Einsatz in einem System für Benachrichtigung über Informationen, das einschließt:
einen Server (360) sowie eine Vielzahl von Geräten (10, 120), wobei die Vielzahl von Geräten ein erstes Gerät (10) einschließt und das Verfahren für Benachrichtigung über Informationen umfasst:
Erfassen, ob eine Person anwesend ist, an jedem der Vielzahl von Geräten (10, 120), sowie
Erzeugen eines Anwesenheits/Abwesenheits-Signals das Informationen über Anwesenheit/Abwesenheit einer Person enthält,
Erzeugen eines Benachrichtigungs-Signals, das Benachrichtigungs-Informationen, die einem Benutzer bereitgestellt werden sollen, der das erste Gerät (10) verwendet, sowie Benutzer-Informationen enthält, die den Benutzer identifizieren, an dem ersten Gerät (10),
Extrahieren von Verhaltens-Informationen, die Informationen über ein Verhalten des Benutzers sind, der das erste Gerät (10) benutzt, auf Basis der Benutzer-Informationen, der Benachrichtigungs-Informationen sowie der Anwesenheits/Abwesenheits-Informationen, an dem Server (360)
Akkumulieren der durch die Verhaltens-Extrahiereinrichtung (64) extrahierten Verhaltens-Informationen in einer Datenbank (65) für Verhaltens-Informationen;
Erfassen der in dem Benachrichtigungs-Signal enthaltenen Benachrichtigungs-Informationen sowie der in dem Anwesenheits/Abwesenheits-Signal enthaltenen Informationen über Anwesenheit/Abwesenheit einer Person an dem Server (360);
Bestimmen einer angenommenen Position des Benutzers auf Basis der Informationen über Anwesenheit/Abwesenheit einer Person,
Bestimmen eines angenommenen Verhaltens des Benutzers auf Basis der Informationen über Anwesenheit/Abwesenheit einer Person sowie der in der Datenbank (65) für Verhaltens-Informationen akkumulierten Verhaltens-Informationen,
Bestimmen eines vorgegebenen Verhaltens als ein Bereitschafts-Zielverhalten unter Verwendung der in der Datenbank (65) für Verhaltens-Informationen akkumulierten Verhaltens-Informationen,
Auswählen eines zweiten Gerätes (120) aus der Vielzahl von Geräten (10, 120), das in der Lage ist, die Benachrichtigungs-Informationen für eine Person darzustellen, die sich an der angenommenen Position befindet;
Veranlassen, dass ein zweites Gerät (120) die Benachrichtigungs-Informationen darstellt, Ändern einer Form der Darstellung entsprechend Einstellungs-Informationen für die Darstellung, die Informationen über die Person sind, die sich an der angenommenen Position befindet, und
Feststellen, ob das angenommene Verhalten dem vorgegebenen Bereitschafts-Zielverhalten entspricht, sowie Veranlassen, dass das zweite Gerät (120) die Benachrichtigungs-Informationen nur dann darstellt, wenn das angenommene Verhalten ein anderes Verhalten als das Bereitschafts-Zielverhalten ist.

## Revendications

1. Système de notification d'informations comprenant
une pluralité de dispositifs (10, 120) comprenant un premier dispositif, chacun de la pluralité de dispositifs (10, 120) comprenant
une unité de détection (16, 26) configurée pour détecter si une personne est présente et pour générer un signal de présence-absence comprenant des informations sur la présence-absence de la personne, le premier dispositif (10) comprenant en outre
un générateur (11) configuré pour générer un signal de notification comprenant des informations de notification à fournir à un utilisateur qui utilise le premier dispositif (10) et des informations d'utilisateur identifiant ledit utilisateur, le système de notification d'informations comprenant en outre un serveur (360) comprenant :
un extracteur de comportement (64) configuré pour extraire des informations sur le comportement de l'utilisateur qui utilise le premier appareil (10), sur la base des informations sur l'utilisateur, des informations de notification et des informations de présence-absence
une base de données d'informations comportementales (65) configurée pour accumuler les informations comportementales extraites par l'extracteur de comportement (64) ;
un acquéreur d'informations (61) configuré pour acquérir les informations de notification incluses dans le signal de notification et les informations de présence-absence de la personne incluses dans le signal de présence-absence ; et
un dispositif de commande de présentation (366) configuré pour
déterminer la position présumée de l'utilisateur sur la base des informations relatives à l'absence de la personne,
déterminer un comportement présumé de l'utilisateur sur la base des informations relatives à l'absence de la personne et des informations sur ledit comportement accumulées dans la base de données d'informations sur le comportement (65),
déterminer, en utilisant les informations comportementales accumulées dans la base de données d'informations comportementales (65), un comportement prédéterminé en tant que comportement cible en attente ,
sélectionner un second dispositif (120) parmi la pluralité de dispositifs (10, 120) qui est capable de présenter les informations de notification à une personne qui se trouve à la position présumée,
de sorte qu'un second dispositif (120) présente les informations de notification,
modifier une forme de présentation en fonction d'une information de mise en scène qui est une information sur la personne qui est dans la position présumée, et
déterminer si le comportement présumé correspond au comportement cible de veille prédéterminé et faire en sorte que le second dispositif (20) ne présente les informations de notification que si le comportement présumé est un comportement autre que le comportement cible de veille.

2. Système de notification d'informations selon la revendication 1, dans lequel les informations relatives à la configuration de la présentation comprennent les informations de présence-absence de la personne.

3. Système de notification d'informations selon les revendications 1 ou 2, dans lequel le second dispositif (120) comprend un écran configuré pour afficher une image de notification correspondant à l'information de notification.

4. Procédé de notification d'informations à utiliser dans un système de notification d'informations comprenant :
un serveur (360) et une pluralité de dispositifs (10, 120), la pluralité de dispositifs comprenant un premier dispositif (10), le procédé de notification d'informations comprenant les opérations suivantes:
détecter, sur chacun des dispositifs (10, 120), si une personne est présente et générer un signal de présence-absence comprenant des informations de présence-absence de la personne,
générer, au niveau du premier dispositif (10), un signal de notification comprenant des informations de notification à fournir à un utilisateur qui utilise le premier dispositif (10) et des informations d'utilisateur identifiant ledit utilisateur,
extraire, au niveau du serveur (360), des informations sur le comportement de l'utilisateur qui utilise le premier appareil (10), sur la base des informations sur l'utilisateur, des informations sur les notifications et des informations de présence-absence ;
accumuler, dans une base de données d'informations sur le comportement (65), les informations sur le comportement extraites par l'extracteur de comportement (64) ;
acquérir, au niveau du serveur (360), les informations de notification incluses dans le signal de notification et les informations de présence-absence de la personne incluses dans le signal de présence-absence ;
déterminer la position présumée de l'utilisateur sur la base des informations de présence-absence de la personne,
déterminer un comportement présumé de l'utilisateur sur la base des informations de présence-absence de la personne et des informations de comportement accumulées dans la base de données d'informations de comportement (65),
déterminer, en utilisant les informations comportementales accumulées dans la base de données d'informations comportementales (65), un comportement prédéterminé en tant que comportement cible en attente,
sélectionner un second dispositif (120) parmi la pluralité de dispositifs (10, 120) qui est capable de présenter les informations de notification à une personne qui se trouve à la position présumée, ce qui conduit le second dispositif (120) à présenter les informations de notification,
modifier la forme de présentation en fonction des informations sur le cadre de présentation qui sont des informations sur la personne qui occupe la position présumée, et
déterminer si le comportement présumé correspond au comportement cible de veille prédéterminé et faire en sorte que le second dispositif (120) ne présente les informations de notification que si le comportement présumé est un comportement autre que le comportement cible de veille.
